# EUROPEAN PATENT SPECIFICATION

(11) **EP 4 112 401 B1**
(45) Date of publication and mention of the grant of the patent: **03.04.2024**
(21) Application number: 21183381.9
(22) Date of filing: 02.07.2021
(51) Int. Cl.: B60T 17/04

(54) **APPARATUS FOR DETECTING A FAILURE OF A GLADHAND COUPLER**
VORRICHTUNG ZUR ERKENNUNG EINES FEHLERS EINES GLADHAND KUPPLUNG
APPAREIL DE DÉTECTION D'UNE DÉFAILLANCE D'UN COUPLEUR DE TYPE TÊTE D'ACCOUPLEMENT

(43) Date of publication of application: 04.01.2023
(73) Proprietor: KNORR-BREMSE Systeme für Nutzfahrzeuge GmbH, 80809 München (DE)
(72) Inventor: JUNDT, Oliver, 74394 Hessigheim (DE)

(56) References cited:
- CA-A1- 2 087 386
- US-A- 3 397 925
- US-A1- 2018 326 963
- US-B1- 9 738 125

## Description

The present invention relates to an apparatus and a method for detecting a failure of a gladhand coupler connecting a towing component and a trailer component of a commercial or railroad vehicle, and in particular to a trailer gladhand disconnect detection.

In commercial or railroad vehicles, hose connections link a tractor and a trailer component in order to provide air pressure for a braking system of the latter. For compatibility reasons these hose connections are usually configured as gladhand couplers. The terminology derives from connection elements which do not have a specific male or female configuration, but rather provide a form-locked join in a way resembling a pair of hands shaking.

Especially in commercial vehicles there are typically two gladhand couplers connecting a tractor and a trailer. A first gladhand coupler, referred to as control line or service line, provides pressure for a service brake, while a second gladhand coupler, referred to as supply line or emergency line, provides pressure for a parking or emergency brake of the trailer. While the control line receives pressure individually for every service brake application in the trailer component, the supply line is kept under pressure constantly, applying the brake automatically as soon as the pressure is released.

A gladhand coupler allows a fast connection or disconnection of tractor and trailer component, often automatic or without any further tools. Especially autonomous vehicles require a verification that a gladhand coupler is securely operational. Therefore there is a demand for a system which is configured to detect a failure of a gladhand coupler connecting a towing component and a trailer component of a commercial or railroad vehicle.

In the state of the art there exist systems which detect a pressure loss for a brake system of a trailer and trigger a reaction. One such system is disclosed in CA 2 087 386 A1, where a control valve provides pressure for keeping a parking brake in an "OFF" position. If the pressure, provided through the emergency gladhand, drops below a certain value, the control valve vents the parking brake actuators (i.e. activates the parking brakes).

A further contribution to this problem is achieved by the apparatus of claim 1, by the method of claim 8, and by the computer programming product of claim 9. The dependent claims refer to further advantageous realizations of the subject matter of the independent claims.

The present invention relates to an apparatus for detecting a failure of a gladhand coupler connecting a towing component and a trailer component of a commercial or railroad vehicle. In case of a commercial vehicle, the towing component may in particular be a tractor, and the trailer component a semi-trailer. In case of a railroad vehicle, the towing component may typically be a locomotive, and the trailing vehicle may be a coach, or a goods wagon. The gladhand coupler may connect the towing and trailer components either directly or indirectly. In the latter case, the gladhand coupler may e. g. physically extend from one trailer or freight wagon to a next, while the pressure is however still controlled by an appropriate system on the towing vehicle. The towing component is configured with a triggerable mechanism adapted to change, through the gladhand connector, the pressure for braking the trailer component. This mechanism may include a control unit that is able to control the braking pressure for the trailer when a corresponding trigger condition is fulfilled. For this, the apparatus comprises a triggering module, configured to trigger the mechanism. It is further characterized by a detection module, which is configured to detect a reaction of the commercial or railroad vehicle after the triggering module has triggered the mechanism. The detection module is adapted to attribute this reaction to a failure of the gladhand coupler, and to issue a warning signal about the failure of the gladhand coupler.

It is understood that the apparatus is likewise able to detect other failures of the brake system, in particular, for the trailer brake. However, the gladhand coupler is a likely candidate for a faulty component (e.g. because it is handled manually). Therefore, even if the present invention describes the apparatus in conjunction with a possibly defect gladhand coupler, embodiments relate also to the detection of other faulty components of the brake system. For example, if the reaction on the brake actuation is not as expected, the vehicle should be stopped and examined to find out the reason of the failure (whether or not it was caused by the gladhand coupler). As long as the actuation of the trigger mechanism (brake test) is performed at low speed (e.g. below 10 km/h and/or on a flat road), the vehicle combination can safely be stopped even without any trailer brake. On the other hand, if the brake test is successful (the reaction is as expected) the vehicle can continue its journey.

The apparatus may be a stand-alone device, and may have been backfitted into the towing component. It may be incorporated into an electronic control unit (ECU) adapted for other tasks, in particular into a brake ECU. Functions performed by the apparatus may be shared with other units comprised in the towing component of the commercial or railroad vehicle. The triggering module and the detection module may or may not be two physically separate entities, and it may be advantageous to configure them to share functions.

The detection of a reaction of the commercial or railroad vehicle is achieved by measuring a physical effect on the vehicle. Information about this effect may be gathered from measurement equipment specifically dedicated for this task, or collected from a further systems on the vehicle, as e.g. from a brake or brake surveillance system. In one embodiment, the detection module comprises an acceleration sensor, and processes data from the acceleration sensor after the triggering module has triggered the mechanism. The detection module may be configured to correlate the acceleration with a particular procedure in which the triggering module is configured to trigger the mechanism. In a further embodiment, the detection module is configured to receive data pertaining to a longitudinal acceleration from a present brake system. The detection module may also be configured to receive electronic data from pressure sensors in a pressure chamber of a brake unit of the trailer component, and to correlate this electronic data with the procedure in which the triggering module has triggered the mechanism.

The detection module is advantageously configured to combine information from different sources for attributing a reaction reliably to a failure of the gladhand coupler, and for meeting redundancy requirements in autonomous commercial or railroad vehicles. The detection module may for example be configured to initially assume any lacking or inadequate reaction to be due to a failure of the gladhand coupler, and to use further data to then corroborate this assumption. A result of the attribution may thus comprise a probability value for a failure of the gladhand coupler. This may be reflected in a correspondingly adapted warning signal.

Optionally, if the towing component is configured to generate an information about a driving status of the commercial or railroad vehicle, the triggering module is configured to receive the information about the driving status and to trigger the mechanism based on the information about the driving status.

Using the information about the driving status may in particular serve to keep an interference of the apparatus with driving tasks of a driver or of an autonomous driving system at a minimum. The driving status may, for example, correspond to a steady cruising situation, as e.g. to a constant speed and/or driving direction for a certain amount of time, or to various maneuvers. Advantageously, an information about such a driving status is obtained from a planning layer of a module performing an autonomous driving task in the towing component of the commercial or railroad vehicle. However, the driving situation information may also merely comprise a speed and direction of the commercial or railroad vehicle. In such a case, stable cruising may be inferred, e.g. by the triggering module or by the detection module, from monitoring this information. In other words, either module may be configured to monitor speed and/or yaw of the vehicle, and the mechanism may be triggered if the monitored quantity is sufficiently stable over a specified time.

The driving status information may further indicate if a trailer component is in fact currently attached to the towing component. Again, the triggering of the mechanism may be based on the driving status information in the sense that the information allows or impedes such a triggering, or in that the information provides a cross-reference or a necessary prerequisite for triggering the mechanism.

Optionally, the triggering module is configured to trigger the mechanism based on an engine start on the towing component of the commercial or railroad vehicle. The triggering module may in particular be configured to trigger the mechanism based on information pertaining to a driveaway of the commercial or railroad vehicle, detailing e.g. if such a driveaway is imminent, or in process.

The triggering module may also be configured to trigger the mechanism based on a connection and/or disconnection of the trailer component. In a commercial vehicle, a connection or disconnection of the trailer may be observed in several ways. A first way comprises a measurement of a trailer brake light, in particular a stop light or an indicator, in order to verify that the trailer is connected. A further possibility is to evaluate a voltage at PIN5 of an electric trailer component connection. Typically, this voltage is employed for a trailer warning lamp, and the voltage is lowered by a trailer brake system for a short time after every power initialization on the trailer component. The connection or disconnection status may also be obtained from further information from a towing or trailer component brake system, in particular from an anti-lock braking system (ABS) or an electronic stability program (EPS). These brake systems generate and distribute standardized diagnostic data about the current brake situation, which allows to check if a trailer is connected.

The triggering module may further be configured to trigger the mechanism based on information pertaining to a brake application, and/or a braking process initialization. This information may also be received from the ABS or EPS.

The triggering module may also trigger the mechanism if an acceleration is detected on the commercial or railroad vehicle. This may be a sudden acceleration, as e.g. a jolt, or due to a sudden change of driving direction. Such a sudden acceleration can point to an external event which may have affected the gladhand coupler. In this case, checking for a failure of the gladhand coupler can be an appropriate act of surveillance. In a different situation, the acceleration may however also be of a more continuous nature, and in fact signal a maneuver of the commercial or railroad vehicle in which the triggering of the mechanism should be suppressed.

Similarly to measuring such an acceleration, the triggering module may also be configured to trigger the mechanism based on an information about a force acting on the towing component in the direction or in opposite direction of the trailer component, or alternatively a relative acceleration between the two components.

The triggering module may also trigger the mechanism based on an information about a slope of a road. The slope may have an additional acceleration effect on the commercial vehicle, and in particular lead to a relative acceleration, which may be taken into account when evaluating whether or not to trigger the mechanism.

Any information on which the triggering of the mechanism is based may be obtained or evaluated in particular via power line carrier (PLC). Due to an increasing complexity of network systems in vehicles, especially in autonomous vehicles, the state of the art has developed methods for sending and receiving information over power lines providing electric energy to the various components or electronic control units of a vehicle, rather than over dedicated information connections. PLC can be employed to reduce the amount of physical wiring necessary to transmit information between various parts of the vehicle. Besides PLC, the triggering module may receive information for detecting and attributing a reaction of a commercial vehicle via a controller area network (CAN). This may be particularly advantageous, as transmitting the information over the vehicle CAN is in many cases standard procedure. For example, the engine torque is typically sent via CAN bus from an electronic control unit of the engine to the brake system. The vehicle CAN also serves to transmit diagnostic information from the trailer to the tractor in standardized form, as e.g. according to ISO 11992. The triggering module may be configured to evaluate this information.

Optionally, the triggering module is configured, by triggering the mechanism, to change the pressure for braking the trailer component in one or more of the following ways: for a limited time (e.g., one second), and/or by a limited amount (e.g., 1 bar), and/or by one or more pulses, and/or by varying a strength or length of pulses, and/or repeatedly. Advantageously, the brake pressure to the trailer component is a short pulse, such that as a reaction, a jerk in a longitudinal direction is measured. Both the limited time as well as the limited amount may increase with the number of repetitions, e.g. by 1 second or 0.5 bar per repetition, or in some other appropriate scheme. These limitations, and/or these repetitions, may also be based on the information on which a triggering of the mechanism is based. They may, furthermore, be requested or set by the detection module. The detection module may be configured to thereby improve a detection probability or a specification of the failure.

For example, the brake pressure may start with a short and low pulse. If an expected response will be detected (e.g. by measuring a brake action), the apparatus may conclude that the brake (including the gladhand coupler) operates correctly. If the response is not as expected (e.g. outside a tolerance range), one or more other brake pulse(s) may be applied to the trailer, which may be stronger or longer, but still below a level that would potentially jeopardies the safety of the vehicle combination. If also this test fails, the vehicle may stop automatically or reduces its speed (e.g. if a stop is not possible) or a warning is provided to the driver (which can be a human driver or automated driver).

Compared to constant or increasing pressure, an application of time-limited pulses has several advantages. A first advantage is that a changing of a road slope will not negatively affect or disturb the detection of the reaction. The effect of the slope can be sufficiently constant. An uphill slope will be detected as a deceleration. Another advantage is that a disturbance of a driver or an autonomous system of the towing component of the commercial or railroad vehicle is minimized. A further advantage consists in a minimal brake pad wear.

Optionally, the detection module is configured to detect and/or to attribute the reaction of the commercial or railroad vehicle to a failure of the gladhand coupler in a way based on an acceleration, as has been mentioned before. The acceleration may e.g. be reported by an accelerometer within the detection module, or within a different system of the commercial or railroad vehicle.

The detection and/or attribution may also be based on a measurement of a speed of a wheel of the commercial or railroad vehicle. In the state of the art, a wheel speed is typically measured by a brake system, and provided as diagnostic information to other electronic control units of the commercial or railroad vehicle. A change in the speed of the wheel can effectively yield the same information as an accelerometer.

The detection module may further be configured to base the detection and attribution on an engine torque, as e. g. in a driveaway situation where the engine torque may be correlated, by the detection module, with the acceleration in order to detect the failure.

The detection module may furthermore be configured to base the detection and attribution on information from a brake system of the towing and/or trailer component of the commercial or railroad vehicle. Brake system information may in particular be received from an ABS or an ESP. These systems provide standardized diagnostic data about the current brake situation.

The detection module may also be configured to base the detection and attribution on a mass of the commercial or railroad vehicle, and/or of its towing or trailer component. The mass may be available from a sufficiently advanced autonomous driving system. A mass may also be inferred from engine torque and acceleration data. It may also be estimated from a type of the trailer component, and/or reference values may be stored in the detection module. Especially in the latter case, the detection module may be configured to assume a worst case scenario, like a maximally loaded trailer component.

The detection module may also be configured to base the detection and attribution on a driving status information, similar to the one detailed before for the triggering module. Here the driving status information may be the same as the one provided to the triggering module. The detection module may however also be configured to request an update of this driving status information, or to request a different driving status information.

The detection module may, again similarly to the triggering module, receive information via PLC, and/or via a CAN.

Advantageously, the detection module is configured to combine information from several sources, and/or received via several means of communication, as described above, in order to cross-check the information and derive a plausibility that there is a failure in the gladhand coupler.

Optionally, the detection module is configured, after attributing the reaction to a failure of the gladhand coupler, to control a further triggering of the mechanism by the triggering module. As mentioned before, the detection module may in particular be configured to set a number, frequency and/or intensity of repetitions for triggering the mechanism. The detection module may be configured to determine a way to control the mechanism based on a quality of an initial detection and attribution, and e.g. only request repetitions if a failure of the gladhand is uncertain, as e.g. if a probability for the failure is within 0.4 to 0.6 (if 1 stands for a certain failure of the gladhand coupler).

Optionally, the detection module is further configured to detect a reaction of the commercial or railroad vehicle independently from the triggering of the mechanism by the triggering module, and to attribute the reaction to a gladhand coupler which is a supply line connector. If such a supply line gladhand coupler is disconnected, the trailer component typically brakes automatically. This can be detected by a combination of information as described above. In one embodiment, the detection module is configured to monitor engine torque and acceleration, and to initiate correlations with further information if the latter is lower than anticipated from the former, in order to attribute the reason to a failure of the supply line gladhand coupler.

Embodiments further relate to a method for detecting a failure of a gladhand coupler between a towing component and a trailer component of a commercial or railroad vehicle. The towing component is configured with a triggerable mechanism adapted to change, through the gladhand coupler, a pressure for braking the trailer component. The method is characterized by the following steps:
triggering the mechanism; detecting a reaction of the commercial or railroad vehicle after the triggering; and attributing the reaction to a failure of the gladhand coupler.

The method may be implemented in software, or respectively on a computer program product, and in particular within an electronic control unit of the towing component. Therefore, embodiments also relate to a computer program product having a program code for performing the method, when the computer program is executed on a processor.

Some examples of the proposed apparatus and method will be described in the following by way of examples only, and with respect to the accompanying figures, in which
- Fig. 1: schematically depicts an apparatus according to the present invention,
- Fig. 2: depicts a method for detecting a failure of a gladhand coupler connecting a towing component and a trailer component of a commercial or railroad vehicle.

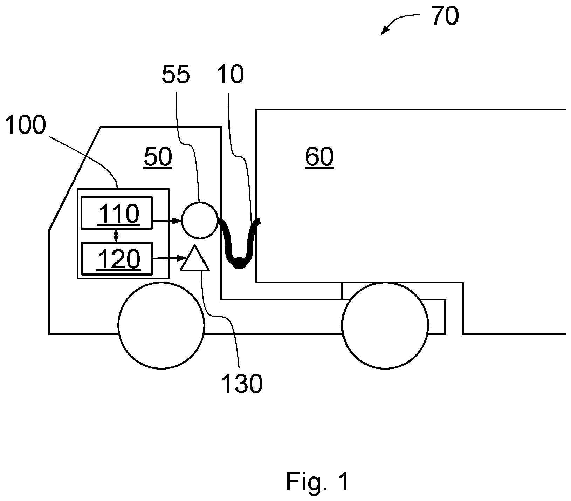

**Fig. 1** shows a schematic illustration of an apparatus 100 for detecting a failure of a gladhand coupler 10 connecting a towing component 50 and a trailer component 60 of a commercial or railroad vehicle 70. The towing component 50 is configured with a triggerable mechanism 55 adapted to change, through the gladhand coupler 10, a pressure for braking the trailer component 60. The apparatus 100 is installed on the towing component 50 and comprises a triggering module 110, configured to trigger the mechanism 55, and a detection module 120, configured to detect a reaction of the commercial or railroad vehicle 70 after the triggering module 110 has triggered the mechanism 55, to attribute the reaction to a failure of the gladhand coupler 10, and to issue a warning signal 130 about the failure of the gladhand coupler 10. The warning signal 130 may be adapted for a driver or for an autonomous driving unit of the commercial or railroad vehicle 70.

The apparatus 100is advantageously adapted for detecting a failure in a control line gladhand coupler 10. However, it may also be configured to detect a failure in a supply line gladhand coupler 10.

If the supply line is disconnected, the trailer component 60 is typically braked automatically. This may be detected by observing engine torque and acceleration: The detection module 120 may be configured to attribute a situation where the engine torque increases without the vehicle 70 accelerating accordingly to a failure of the supply line gladhand coupler 10. The apparatus 100 may be configured to receive further information in order to corroborate the attribution. For example, the detection module 120 may correlate the mismatch between engine torque and acceleration with information from a braking system electronic control unit, which indicates a current status of the braking system, such as data from pressure chambers, or application of the brake. The information may also derive from higher systems, in particular from an ABS or an ESP. The information may be received, for example, via a vehicle CAN or a PLC, which offer standards for conveying diagnostic data from the trailer 60 to the towing component 50. The apparatus 100 may be hosted in a brake ECU. Advantageously, the detection module 120 may be configured to base the detection and attribution on a slope of a road and/or on a mass of the trailer component 60 and/or the towing component 50.

If the apparatus 100 is configured to detect a failure of a control line gladhand coupler 10, the triggering module 110 autonomously increases the pressure to brakes of the trailer component 60. The detection module 120 checks if a reaction on the towing component 50 can be measured. Advantageously, the brake pressure to the trailer component 60 is a short pulse. The reaction may then in particular be a jerk or sudden acceleration in longitudinal direction, i.e. in a direction from the towing component 50 towards the trailer component 60. In one embodiment, the detection of the reaction is achieved by a longitudinal acceleration sensor, which may already be available on the towing component 50, e.g. as a component of an ESP. In a further embodiment, the reaction is derived from information about a wheel speed either from the towing component 50 from the trailer component 60, which is typically available through the ABS.

Advantageously the pressure pulse to the trailer component 60 is low (e.g. 1 bar). If no reaction is detected, an additional pulse with increased pressure level (e.g. +0.5 bar) can be applied after a certain time, e.g. after a couple of seconds or minutes. This may be repeated either until a reaction is detected, or up to a maximum supply pressure level. If no reaction at supply pressure level is detected, the pneumatic control line may be deemed to be broken - unless no trailer component 60 is connected.

In embodiments, the apparatus 100 is configured to detect if a trailer component 60 is connected. For this, the triggering module 110 and/or the detection module 120 may be configured to perform a measurement of a current status of a trailer brake light (a stop light, or an indicator), to evaluate information retrieved via PLC or trailer CAN (e.g. according to the ISO 11992 protocol), and/or to evaluate a voltage at PIN 5 of an electric trailer connection of a commercial vehicle 70. By means of the voltage, typically a warning lamp is set to a lower level by he trailer brake system for a short period of time after every power-on (or start-up), such that monitoring the voltage can result in detecting the connection of the trailer component 60. The trailer connection detection can be employed as a cross-reference in order to rule out other brake failures and determine if only the control-line gladhand coupler 10 is disconnected, i.e. if the failure indeed lies with the gladhand coupler 10.

Detection can be repeated after a certain time, in order to prove a result obtained before, and/or in order to minimize a false result, which may arise e.g. due to external disturbances such as potholes while driving. The number of repetitions can be fixed, or tied to a quality of the detection so far.

Advantageously, the apparatus 100 is configured to perform the check of the gladhand coupler 10 shortly before drive-off, after a trailer component 60 is connected or disconnected, and/or during dynamical uncritical vehicle states such as straight-line driving. Advantageously, the apparatus 100 is configured to perform the check in situations where a disturbance for a driver or an autonomous system of the commercial or railroad vehicle 70 is mimimized, as e.g. when driving at constant speed. The apparatus 100 may be configured to perform the check repeatedly, in order to reliably monitor the status of the gladhand coupler 10 over time.

Furthermore, the triggering module 110 and/or the detection module 120 may be adapted to take a slope or a slope derivative of a road into account, in order to render the detection of the failure robust against sudden slope changes.

The apparatus 100 may be hosted in a brake ECU also in the case where the gladhand coupler 10 is a control line connector.

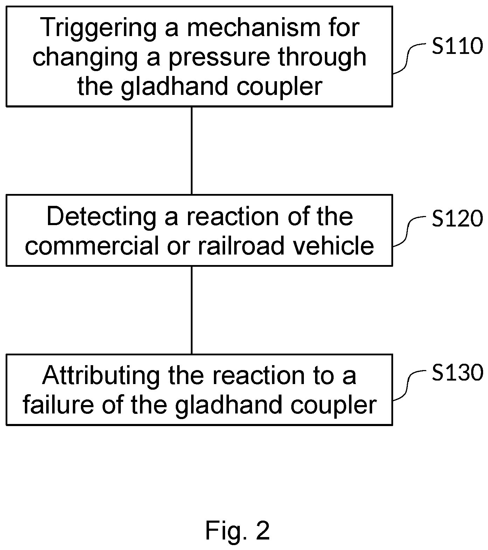

**Fig. 2** depicts steps of a method for detecting a failure of a gladhand coupler 10 between a towing component 50 and a trailer component 60 of a commercial or railroad vehicle 70. The towing component 50 is configured with a triggerable mechanism 55 adapted to change, through the gladhand coupler 10, a pressure for braking the trailer component 60. A step of the method comprises triggering S 110 the mechanism 55. A further step of the method comprises detecting S120 a reaction of the commercial or railroad vehicle 70. A further step of the method comprises attributing S130 the reaction to a failure of the gladhand coupler 10.

The method may also be a computer-implemented method. A person of skill in the art will readily recognize that steps of the above-described method may be performed by programmed computers. Embodiments are also intended to cover program storage devices, e.g., digital data storage media, which are machine or computer readable and encode machine-executable or computer-executable programs of instructions, wherein the instructions perform some or all of the acts of the above-described methods, when executed on the computer or processor.

### LIST OF REFERENCE SIGNS

- 10: gladhand coupler
- 50: towing component of a commercial or railroad vehicle
- 55: mechanism adapted to change a pressure through the gladhand coupler
- 60: trailer component of a commercial or railroad vehicle
- 70: commercial or railroad vehicle
- 100: apparatus for detecting a failure of a gladhand coupler
- 110: triggering module
- 120: detection module
- 130: warning signal
- S110, S120, S130: steps of a method

## Claims

1. An apparatus (100) for detecting a failure of a gladhand coupler (10) connecting a towing component (50) and a trailer component (60) of a commercial or railroad vehicle (70), wherein the towing component (50) is configured with a triggerable mechanism (55) adapted to change, through the gladhand coupler (10), a pressure for braking the trailer component (60),
**characterized by**
a triggering module (110), configured to trigger the mechanism (55); and
a detection module (120), configured to detect a reaction of the commercial or railroad vehicle (70) after the triggering module (110) has triggered the mechanism (55), to attribute the reaction to a failure of the gladhand coupler (10), and to issue a warning signal (130) about the failure of the gladhand coupler (10).

2. The apparatus (100) one of claim 1, wherein the towing component (50) is configured to generate an information about a driving status of the commercial or railroad vehicle (70),
**characterized in that**
the triggering module (110) is configured to receive the information about the driving status, and to trigger the mechanism (55) based on the information about the driving status.

3. The apparatus (100) of one of the preceding claims,
**characterized in that**
the triggering module (110) is configured to trigger the mechanism (55) based on one or more of the following:
- an engine start,
- a driveaway,
- a trailer component (60) connection and/or disconnection,
- a brake application or braking process initialization,
- an acceleration,
- a force acting on the towing component (50) in the direction or in the opposite direction of the trailer component (60),
- a slope of a road,
- an information received via a power line carrier,
- an information received via a controller area network.

4. The apparatus (100) of one of the preceding claims,
**characterized in that**
the triggering module (110) is configured, by triggering the mechanism (55), to change the pressure for braking the trailer component (60) in one or more of the following ways:
- for a limited time,
- by a limited amount,
- by one or more pulses,
- by varying a strength or length of pulses,
- repeatedly.

5. The apparatus (100) of one of the preceding claims,
**characterized in that**
the detection module (120) is configured to detect and/or attribute the reaction based on one or more of the following:
- an acceleration,
- a speed of the commercial or railroad vehicle (70),
- an engine torque,
- towing component (50) and/or trailer component (60) brake information,
- a voltage at PIN 5 of an electric trailer component (60) connection,
- a mass of the towing component (50) and/or the trailer component (60),
- an information about a driving status,
- an information received via a power line carrier,
- an information received via a controller area network.

6. The apparatus (100) of one of the preceding claims,
**characterized in that**
the detection module (110) is configured, after attributing the reaction to a failure of the gladhand coupler (10), to control the triggering module (110) in further triggering the mechanism (55).

7. The apparatus (100) of one of the preceding claims,
**characterized in that**
the detection module (120) is further configured to detect a reaction of the commercial or railroad vehicle (70) independently from the triggering of the mechanism (55) by the triggering module (110), and to attribute the reaction to a gladhand coupler (10) which is a supply line connector.

8. A method for detecting a failure of a gladhand coupler (10) between a towing component (50) and a trailer component (60) of a commercial or railroad vehicle (70), wherein the towing component (50) is configured with a triggerable mechanism (55) adapted to change, through the gladhand coupler (10), a pressure for braking the trailer component (60),
**characterized by**
triggering (S110) the mechanism (55);
detecting (S120) a reaction of the commercial or railroad vehicle (70) after the triggering (S110);
attributing (S130) the reaction to a failure of the gladhand coupler (10).

9. A computer programming product having a program code for performing the method of claim 8 if the program code is executed on a computer or data processing unit.

## Patentansprüche

1. Einrichtung (100) zum Erkennen eines Ausfalls einer Gladhand-Kupplung (10), die eine Zugkomponente (50) und eine Anhängerkomponente (60) eines Nutz- oder Schienenfahrzeugs (70) verbindet, wobei die Zugkomponente (50) mit einem auslösbaren Mechanismus (55) konfiguriert ist, der angepasst ist, um über die Gladhand-Kupplung (10) einen Druck zum Bremsen der Anhängerkomponente (60) zu ändern,
**gekennzeichnet durch**
ein Auslösemodul (110), das konfiguriert ist, um den Mechanismus (55) auszulösen; und
ein Erkennungsmodul (120), das konfiguriert ist, um eine Reaktion des Nutz- oder Schienenfahrzeugs (70) zu erkennen, nachdem das Auslösemodul (110) den Mechanismus (55) ausgelöst hat, um die Reaktion einem Ausfall der Gladhand-Kupplung (10) zuzuschreiben, und um ein Warnsignal (130) über den Ausfall der Gladhand-Kupplung (10) auszugeben.

2. Einrichtung (100) nach Anspruch 1, wobei die Zugkomponente (50) konfiguriert ist, um eine Information über einen Fahrzustand des Nutz- oder Schienenfahrzeugs (70) zu erzeugen.
**dadurch gekennzeichnet, dass**
das Auslösemodul (110) konfiguriert ist, um die Informationen über den Fahrzustand zu empfangen und den Mechanismus (55) basierend auf den Informationen über den Fahrzustand auszulösen.

3. Einrichtung (100) nach einem der vorstehenden Ansprüche,
**dadurch gekennzeichnet, dass**
das Auslösemodul (110) konfiguriert ist, um den Mechanismus (55) basierend auf einem oder mehr von Folgendem auszulösen:
- einem Motorstart,
- einem Anfahren,
- einer Verbindung und/oder Trennung der Anhängerkomponente (60),
- einer Bremsbetätigung oder Bremsprozessinitialisierung,
- einer Beschleunigung,
- einer auf die Zugkomponente (50) in Richtung oder in Gegenrichtung der Anhängerkomponente (60) wirkende Kraft,
- einem Gefälle einer Straße,
- einer über einen Stromleitungsträger empfangenen Information,
- einer über ein Controller Area Netzwerk empfangenen Information.

4. Einrichtung (100) nach einem der vorstehenden Ansprüche,
**dadurch gekennzeichnet, dass**
das Auslösemodul (110) konfiguriert ist, um durch Auslösen des Mechanismus (55) den Druck zum Bremsen der Anhängerkomponente (60) auf eine oder mehrere der folgenden Arten zu ändern:
- eine begrenzte Zeit lang,
- um einen begrenzten Betrag,
- durch einen oder mehrere Impulse,
- durch Variieren einer Stärke oder Länge von Impulsen,
- wiederholt.

5. Einrichtung (100) nach einem der vorstehenden Ansprüche,
**dadurch gekennzeichnet, dass**
das Erkennungsmodul (120) konfiguriert ist, um die Reaktion basierend auf einem oder mehr von Folgendem zu erkennen und/oder zuzuschreiben:
- einer Beschleunigung,
- einer Geschwindigkeit des Nutz- oder Schienenfahrzeugs (70),
- einem Motordrehmoment,
- einer Bremsinformation der Zugkomponente (50) und/oder Anhängerkomponente (60),
- einer Spannung an PIN 5 einer elektrischen Verbindung der Anhängerkomponente (60),
- einer Masse der Zugkomponente (50) und/oder der Anhängerkomponente (60),
- einer information über einen Fahrzustand,
- einer über einen Stromleitungsträger empfangenen Information,
- einer über ein Controller Area Netzwerk empfangenen information.

6. Einrichtung (100) nach einem der vorstehenden Ansprüche,
**dadurch gekennzeichnet, dass**
das Erkennungsmodul (110) konfiguriert ist, um nach dem Zuschreiben der Reaktion zu einem Ausfall der Gladhand-Kupplung (10) das Auslösemodul (110) bei der weiteren Auslösung des Mechanismus (55) zu steuern.

7. Einrichtung (100) nach einem der vorstehenden Ansprüche,
**dadurch gekennzeichnet, dass**
das Erkennungsmodul (120) weiter konfiguriert ist, um eine Reaktion des Nutz- oder Schienenfahrzeugs (70) unabhängig vom Auslösen des Mechanismus (55) durch das Auslösemodul (110) zu erkennen, und die Reaktion einer Gladhand-Kupplung (10) zuzuschreiben, welche ein Versorgungsleitungsverbinder ist.

8. Verfahren zum Erkennen eines Ausfalls einer Gladhand-Kupplung (10) zwischen einer Zugkomponente (50) und einer Anhängerkomponente (60) eines Nutz- oder Schienenfahrzeugs (70), wobei die Zugkomponente (50) mit einem auslösbaren Mechanismus (55) konfiguriert ist, der angepasst ist, um über die Gladhand-Kupplung (10) einen Druck zum Bremsen der Anhängerkomponente (60) zu ändern,
**gekennzeichnet durch**
Auslösen (S110) des Mechanismus (55);
Erkennen (S120) einer Reaktion des Nutz- oder Schienenfahrzeugs (70) nach dem Auslösen (S110);
Zuschreiben (S130) der Reaktion zu einem Ausfall der Gladhand-Kupplung (10).

9. Computerprogrammierprodukt, das einen Programmcode zum Durchführen des Verfahrens nach Anspruch 8 aufweist, wenn der Programmcode auf einem Computer oder einer Datenverarbeitungseinheit ausgeführt wird.

## Revendications

1. Appareil (100) pour détecter une défaillance d'un coupleur à tête d'accouplement (10) raccordant un composant de remorquage (50) et un composant de remorque (60) d'un véhicule commercial ou ferroviaire (70), dans lequel le composant de remorquage (50) est configuré avec un mécanisme déclenchable (55) adapté pour modifier, par l'intermédiaire du coupleur à tête d'accouplement (10), une pression pour freiner le composant de remorque (60),
**caractérisé par**
un module déclencheur (110), configuré pour déclencher le mécanisme (55) ; et
un module de détection (120), configuré pour détecter une réaction du véhicule commercial ou ferroviaire (70) après que le module déclencheur (110) a déclenché le mécanisme (55), pour attribuer la réaction à une défaillance du coupleur à tête d'accouplement (10), et pour émettre un signal d'avertissement (130) concernant la défaillance du coupleur à tête d'accouplement (10).

2. Appareil (100) selon la revendication 1, dans lequel le composant de remorquage (50) est configuré pour générer une information concernant un état de conduite du véhicule commercial ou ferroviaire (70),
**caractérisé en ce que**
le module déclencheur (110) est configuré pour recevoir l'information concernant l'état de conduite, et pour déclencher le mécanisme (55) sur la base des informations concernant l'état de conduite.

3. Appareil (100) selon l'une quelconque des revendications précédentes, **caractérisé en ce que**
le module déclencheur (110) est configuré pour déclencher le mécanisme (55) sur la base d'un ou plusieurs des éléments suivants :
- un démarrage du moteur,
- un convoyage,
- un raccordement et/ou désolidarisation du composant de remorque (60),
- un serrage de frein ou une initialisation du processus de freinage,
- une accélération,
- une force agissant sur le composant de remorquage (50) dans la direction ou dans la direction opposée du composant de remorque (60),
- une pente d'une route,
- une information reçue par l'intermédiaire d'un courant porteur en ligne,
- une information reçue par l'intermédiaire d'un réseau CAN.

4. Appareil (100) selon l'une quelconque des revendications précédentes, **caractérisé en ce que**
le module déclencheur (110) est configuré, en déclenchant le mécanisme (55), pour modifier la pression de freinage du composant de remorque (60) d'une ou plusieurs des manières suivantes :
- pendant un temps limité,
- d'une valeur limitée,
- par une ou plusieurs impulsions,
- en faisant varier la force ou la durée des impulsions,
- à plusieurs reprises.

5. Appareil (100) selon l'une quelconque des revendications précédentes, **caractérisé en ce que**
le module de détection (120) est configuré pour détecter et/ou attribuer la réaction sur la base d'un ou plusieurs des éléments suivants :
- une accélération,
- une vitesse du véhicule commercial ou ferroviaire (70),
- un couple moteur,
- des informations de freinage du composant de remorquage (50) et/ou du composant de remorque (60),
- une tension à la broche 5 d'un raccordement électrique du composant de remorque (60),
- une masse du composant de remorquage (50) et/ou du composant de remorque (60),
- une information sur un état de conduite,
- une information reçue par l'intermédiaire d'un courant porteur en ligne,
- une information reçue par l'intermédiaire d'un réseau CAN.

6. Appareil (100) selon l'une quelconque des revendications précédentes, **caractérisé en ce que**
le module de détection (110) est configuré, après avoir attribué la réaction à une défaillance du coupleur à tête d'accouplement (10), pour commander le module déclencheur (110) en déclenchant en outre le mécanisme (55).

7. Appareil (100) selon l'une quelconque des revendications précédentes, **caractérisé en ce que**
le module de détection (120) est configuré en outre pour détecter une réaction du véhicule commercial ou ferroviaire (70) indépendamment du déclenchement du mécanisme (55) par le module déclencheur (110), et pour attribuer la réaction à un coupleur à tête d'accouplement (10) qui est un connecteur de ligne d'alimentation.

8. Procédé pour détecter une défaillance d'un coupleur à tête d'accouplement (10) entre un composant de remorquage (50) et un composant de remorque (60) d'un véhicule commercial ou ferroviaire (70), dans lequel le composant de remorquage (50) est configuré avec un mécanisme déclenchable (55) adapté pour modifier, par l'intermédiaire du coupleur à tête d'accouplement (10), une pression pour freiner le composant de remorque (60),
**caractérisé par**
le déclenchement (S110) du mécanisme (55) ;
la détection (S120) d'une réaction du véhicule commercial ou ferroviaire (70) après le déclenchement (S110) ;
l'attribution (S130) de la réaction à une défaillance du coupleur à tête d'accouplement (10).

9. Produit de programmation informatique présentant un code de programme pour réaliser le procédé selon la revendication 8 si le code de programme est exécuté sur un ordinateur ou une unité de traitement de données.
